# EUROPEAN PATENT SPECIFICATION

(11) **EP 4 155 969 B1**
(45) Date of publication and mention of the grant of the patent: **03.09.2025**
(21) Application number: 22185757.6
(22) Date of filing: 19.07.2022
(51) Int. Cl.: G06F 16/2458

(54) **QUERY PROCESSING METHOD AND APPARATUS, ELECTRONIC DEVICE AND STORAGE MEDIUM**
ABFRAGEVERARBEITUNGSVERFAHREN UND -GERÄT, ELEKTRONISCHE VORRICHTUNG UND SPEICHERMEDIUM
PROCÉDÉ ET APPAREIL DE TRAITEMENT DE REQUÊTE, DISPOSITIF ÉLECTRONIQUE ET SUPPORT D'ENREGISTREMENT

(30) Priority: 27.09.2021 CN 202111138129
(43) Date of publication of application: 29.03.2023
(73) Proprietor: BEIJING BAIDU NETCOM SCIENCE TECHNOLOGY CO., LTD., Beijing 100085 (CN)
(72) Inventor: WANG, Yifei, Beijing, 100085 (CN); WANG, Yang, Beijing, 100085 (CN); WANG, Yu, Beijing, 100085 (CN)
(74) Representative: dompatent von Kreisler Selting Werner - Partnerschaft von Patent- und Rechtsanwälten mbB

(56) References cited:
- WO-A1-2019/184739
- US-B1- 7 984 043
- AMMAR ALI BEN: "Query Optimization Techniques in Graph Databases", INTERNATIONAL JOURNAL OF DATABASE MANAGEMENT SYSTEMS, vol. 8, no. 4, 30 August 2016 (2016-08-30), pages 01 - 14, XP093009092, ISSN: 0975-5985, Retrieved from the Internet <URL:https://arxiv.org/ftp/arxiv/papers/1609/1609.01893.pdf> DOI: 10.5121/ijdms.2016.8401
- GUERRIERI ALESSIO: "Distributed computing for large-scale graphs", December 2015 (2015-12-01), XP093009099, Retrieved from the Internet <URL:http://www.science.unitn.it/~guerrieri/pubs/thesis15.pdf> [retrieved on 20221216]
- BETHKE ULI: "Why is concurrency overrated to measure performance of data warehouse platforms?", 11 January 2018 (2018-01-11), XP093009094, Retrieved from the Internet <URL:https://sonra.io/redshift/metrics-that-suck-measuring-database-performance-by-concurrency/> [retrieved on 20221216]
- SHAH SONIYA: "Concurrency and Workload Management", 26 June 2017 (2017-06-26), XP093009100, Retrieved from the Internet <URL:https://www.vertica.com/blog/concurrency-workload-management/> [retrieved on 20221216]

## Description

### Field of the Disclosure

The present disclosure relates to the field of computer technologies, and particularly relates to the field of technologies, such as cloud computing technologies, big data technologies, or the like, and particularly to a query processing method and apparatus, an electronic device and a storage medium.

### Background of the Disclosure

Usually, a small computer system is used for a distributed database, each computer may be placed in a separate place, each computer may have a complete copy or a partial copy of a database management system (DBMS), and has its own local database, and many computers in different locations are connected to one another through a network to jointly form a complete and global large database logically centralized and physically distributed.

A graphic database is a non-relational database in which relationship information between entities is stored using a graph theory. A most common example is an interpersonal relationship in a social network. A relational database has a poor effect of storing "relational" data, and its query is complex, slow and beyond expectation, and a unique design of the graphic database just makes up for the defect.

A distributed graph database system has advantages of both the distributed database and the graphic database, and has advantages of simplicity, easiness in use, a high performance, or the like.
From US 7,984,043 B1, a system and method for distributed query processing is known which may compile and optimize query plans for incoming query requests independent of hardware configurations and/or physical locations of data partitions in a distributed storage system (e.g., a data grid).

### Summary of the Disclosure

The present disclosure provides a query processing method and apparatus, an electronic device and a storage medium, as specified in the appended claims.

### Brief Description of Drawings

The drawings are used for better understanding the present solution and do not constitute a limitation of the present disclosure. In the drawings,
Fig. 1 is a schematic diagram according to a first embodiment of the present disclosure;
Fig. 2 is a schematic diagram according to a second embodiment of the present disclosure;
Fig. 3 is a schematic diagram according to a third embodiment of the present disclosure;
Fig. 4 is a working principle diagram of a distributed graph database system according to the present embodiment;
Fig. 5 is a schematic diagram according to a fourth embodiment of the present disclosure; and
Fig. 6 is a block diagram of an electronic device configured to implement a query processing method according to the embodiment of the present disclosure.

### Detailed Description of Preferred Embodiments

The following part will illustrate exemplary embodiments of the present disclosure with reference to the drawings, including various details of the embodiments of the present disclosure for a better understanding.

It should be noted that a terminal device in the embodiments of the present disclosure may include, but is not limited to, a mobile phone, a personal digital assistant (PDA), a wireless handheld device, a tablet computer, and other smart devices; a display device may include, but not limited to, a personal computer, a television, and other devices with a display function.

In addition, the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

In a distributed graph database system, computing nodes are separated from storage nodes. As a party receiving a request, the computing node splits an external retrieval request into a plurality of small query requests, and performs data query to the storage node based on each query request. When the retrieval request is complex, the split small query requests have a large number, and a storage request service is easily filled up.

After a storage node service is filled up, the storage node returns an error message of a busy service. At this point, the computing node may retry the query or directly return entire query failure to a user, resulting in a low query efficiency.

Pressure of the storage node may not be relieved by the retrying of the query when the storage node service is filled up. Since each retrieval request is desired to be completed as quickly as possible, the computing node resends all the query requests obtained by splitting the retrieval request to the storage node, and therefore, when the storage node is filled up, the retrying of the query still takes up a lot of responsiveness of the storage service, such that some simple small requests are difficult to complete.

For the direct return of the entire query failure, it seems that the busy service caused by the current request is solved, but in practice, completed calculation for the entire large query is wasted, and the calculation completed by a system consuming a lot of resources previously is wasted due to the direct return of the failure. At this point, the storage node may provide services, but not at a speed required by the computing node. Then, if the query failure is returned to the user, the user may retry the query by himself, and the practical problem is not solved. Based on the above, the technical solution of the present disclosure is provided to improve the query efficiency.

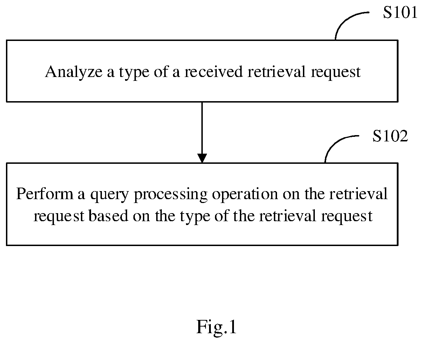

Fig. 1 is a schematic diagram according to a first embodiment of the present disclosure; as shown in Fig. 1, the present embodiment provides a query processing method, which may be applied to a computing node side of a distributed graph database system, and include the following steps of:
S101: analyzing a type of a received retrieval request; and
S102: performing a query processing operation on the retrieval request based on the type of the retrieval request.

In the present embodiment, the retrieval request is sent externally, for example, by a user through an electronic device to a computing node of the distributed graph database system.

In practical applications, the computing node receives the retrieval request and directly splits the retrieval request into a plurality of query requests. Based on each query request, a storage node may be positioned according to a traditional method of positioning a storage node, and then, the query request is sent to the corresponding storage node to obtain a query result. Calculation is performed based on the query results of the plural query requests to obtain a result of the retrieval request, and the result is returned to the electronic device of the user to realize retrieval. The method of positioning a storage node may include, but is not limited to, a method of positioning a storage node by calculating a Hash value or by a pre-established storage relationship table. For example, the retrieval request may be a simple request of querying a certain number, or a complex request of first calculating an average of M numbers and an average of N numbers, and then taking a squared difference between the average of the M numbers and the average of the N numbers.

In the embodiment of the present disclosure, in order to improve the query efficiency, after receiving the retrieval request, the computing node firstly analyzes the type of the retrieval request, and then pertinently performs the query processing operation on the retrieval request based on the type of the retrieval request, so as to improve the query processing efficiency.

In the query processing method according to the present embodiment, the type of the received retrieval request is analyzed, and then, the query processing operation is performed on the retrieval request based on the type of the retrieval request, such that different query processing operations may be pertinently performed on different types of retrieval requests, thus effectively improving the query processing efficiency.

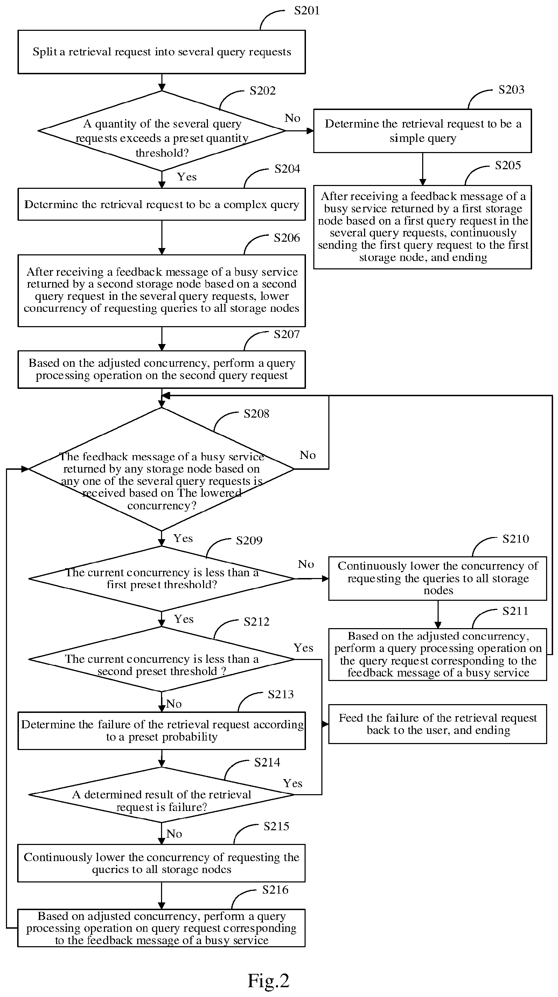

Fig. 2 is a schematic diagram according to a second embodiment of the present disclosure; the technical solution of a query processing method according to the present embodiment of the present disclosure is further described in more detail based on the technical solution of the above-mentioned embodiment shown in Fig. 1. As shown in Fig. 2, the query processing method according to the present embodiment includes the following steps of:
S201: splitting a retrieval request into several query requests.

Each retrieval request is split into a certain number of query requests. For example, the computing node receives a retrieval request of averaging plural numbers. The computing node is required to split the retrieval request into query requests for querying all the numbers, and then calculate an average based on each number queried by the query request.

S202: detecting whether a quantity of the several query requests exceeds a preset quantity threshold; if no, executing step S203; if yes, executing step S204.

S203: determining the retrieval request to be a simple query, and executing step S205.

S204: determining the retrieval request to be a complex query, and executing step S206.

In the present embodiment, the preset quantity threshold may be set according to practical experience, and may be, for example, 3, or 5, or other numbers, which is not limited herein.

If the quantity of the several query requests does not exceed the preset quantity threshold, that is, is less than or equal to the preset quantity threshold, it may be considered that the quantity of the query requests obtained by splitting the retrieval request is reduced at this point, and the retrieval request is a simple query. Otherwise, if the quantity of the several query requests is greater than the preset quantity threshold, it may be considered that the quantity of the query requests obtained by splitting the retrieval request is large at this point, and the retrieval request is a complex query.

The above-mentioned steps S201-S204 are an implementation of the above-mentioned step 101 in the embodiment shown in Fig. 1. In the present embodiment, for example, the type of the retrieval request includes a simple query and a complex query. In practical applications, on the analogy of this principle, the query may be divided into more types based on different quantity thresholds; for example, the query may be divided into three types including a simple query, a general query and a complex query, and a number of the general query is between a number of the simple query and a number of the complex query. By adopting the solution, the retrieval request may be accurately classified, and different query processing operations may be effectively performed on different types of retrieval requests, thereby improving the query processing efficiency.

S205: after receiving a feedback message of a busy service returned by a first storage node based on a first query request in the several query requests, continuously sending the first query request to the first storage node, and ending.

The first query request may be any one of the several query requests. The first storage node is any storage node.

After obtaining the several query requests by the splitting operation, the computing node may traditionally position the storage node corresponding to each query request. To improve a processing efficiency of the computing node, the computing node in the distributed graph database system may be set to have high concurrency, and send plural query requests to plural storage nodes simultaneously. For example, the concurrency of the computing node may reach 256, 512, or other values. For each query request, if the service of the corresponding storage node is normal, data queried by the query request is returned to the computing node. However, each storage node has a limited service capability, and is required to simultaneously receive the query request of each computing node in the distributed graph database system, such that a service of the storage node may be filled up; at this point, the storage node is unable to provide a query service for the query request of the computing node, and may return the feedback message of a busy service to the computing node.

When the retrieval request is a simple query, since the number of the included query requests is limited, and the retrieval request may be guaranteed to have a response as far as possible, the computing node continuously sends the corresponding first query request to the first storage node when receiving the feedback message of a busy service returned by the first storage node.

S206: after receiving a feedback message of a busy service returned by a second storage node based on a second query request in the several query requests, lowering concurrency of requesting queries to all storage nodes; executing step S207.

S207: based on the adjusted concurrency, performing a query processing operation on the second query request; executing step S208.

In the present embodiment, the second query request may be any one of the several query requests, and the second storage node is any storage node.

When the retrieval request is a complex query, considering that the query requests obtained by splitting the retrieval request have a large number, if the retrieval request of each complex query is simultaneously sent to each storage node with high concurrency on each computing node, the storage node is unable to process all the query requests in time, such that all the retrieval requests may not have responses in time. At this point, in order to reduce query congestion of the storage node and strive a maximum resource for each retrieval request, the concurrency of requesting the queries to all the storage nodes may be lowered when the feedback message of a busy service returned by the second storage node is received; and then, based on the adjusted concurrency, the query processing operation is performed on the second query request.

The steps S206-S207 are an implementation of the step S102 in the embodiment shown in Fig. 1. The steps S206-S207 may be applied in a scenario where the concurrency of the computing node is lowered for the first time. For example, when the concurrency is lowered for the first time, a lowered amplitude may be the maximum service capability supported by one storage node, such as 32 worker threads or other values, which is not limited herein.

According to the invention, step S207 specifically includes the following steps: detecting whether the current concurrency is less than the adjusted concurrency; and if yes, sending the second query request to the second storage node, and ending. Otherwise, if no, the detection continues, the second query request is not sent to the second storage node temporarily, and the second query request is sent to the second storage node only when the current concurrency is less than the adjusted concurrency.

In actual operations, when the concurrency N is constant, the computing node sends N query requests to plural storage nodes, and if query data of one query request is returned, the computing node sends a next query request in time, so as to fully utilize the high concurrency for the query.

**In** the scenario of the present embodiment, when the computing node lowers the concurrency, since the previous concurrency is high, the previously sent query request may not have a response, and at this point, the concurrency is not reduced immediately. Therefore, the next query request may not be sent immediately after reception of the returned data of a certain query request, and the corresponding query request is also not sent immediately after reception of the returned feedback message of a busy service. Instead, whether the current real-time concurrency is less than the adjusted concurrency is required to be detected first, if no, the detection continues, and the sending operation may be performed only when the concurrency is less than the adjusted concurrency. With the technology, stable transition may be performed after adjustment of the concurrency, thus effectively guaranteeing the query efficiency.

S208: based on the lowered concurrency, detecting whether the feedback message of a busy service returned by any storage node based on any one of the several query requests is received; if yes, executing step S209; if no, continuing the detection.

This step occurs after steps S206-S207, and at this point, the concurrency of the computing node is lowered, but the feedback message of a busy service fed back by the storage node may still be received. At this point, it may be considered that the service capability of the storage node is still exceeded.

S209: detecting whether the current concurrency is less than a first preset threshold; if no, executing step S210; if yes, executing step S212.

For example, in the present embodiment, the first preset threshold may be set based on practical experience, and may be, for example, the maximum service capability of one storage node.

S210: continuously lowering the concurrency of requesting the queries to all storage nodes; executing step S211.

When the concurrency is not less than the first preset threshold, the concurrency may be lowered by a constant amplitude, for example, by the maximum service capability of one storage node. Certainly, in practical applications, the lowered amplitudes may be the same or different.

S211: based on the adjusted concurrency, performing a query processing operation on the query request corresponding to the feedback message of a busy service, returning to step S208, and continuing the detection.

For the processing procedure of step S211, reference may be made to the specific implementation of step S207, which is not repeated herein.

S212: detecting whether the current concurrency is less than a second preset threshold; if no, executing step S213; if yes, feeding failure of the retrieval request back to the user, and ending.

The second preset threshold is less than the first preset threshold, and a numerical value of the second preset threshold in the present embodiment may also be set based on practical experience. The second preset threshold is a minimum service capability of the system.

If the concurrency is less than the second preset threshold, it is considered that further reduction of the concurrency has no sense, the system is likely to break down, and the failure of the retrieval request may be directly fed back to the user, so as to avoid meaningless waiting of the user.

S213: determining the failure of the retrieval request according to a preset probability.

In the present embodiment, the preset probability may be selected based on practical experience, for example, 0.5; that is, one half of the retrieval requests may be set to fail, and the other half of the retrieval requests may be set to continue. Or, in order to improve the query efficiency, fewer retrieval requests may be set to fail, and more retrieval requests may be set to be continuously queried. At this point, the preset probability may be set to any probability value less than 0.5 and greater than 0. Or, if a load of the storage node is excessively large, more retrieval requests may be set to fail and fewer retrieval requests may be set to be continuously queried, and at this point, the preset probability may be set to any probability value greater than 0.5 and less than 1.

For example, if the preset probability is 0.5, a positive integer may be randomly generated using a random number generator, and options of failure and continuing of the retrieval request may be set for odd numbers and even numbers respectively. In practical applications, the specific implementation of the step may also be any other possible implementation, which is not limited herein.

S214: detecting whether a determined result of the retrieval request is failure; if yes, feeding the failure of the retrieval request back to the user, and ending; otherwise, executing step S215.

S215: continuously lowering the concurrency of requesting the queries to all storage nodes; executing step S216.

Since the concurrency of the computing node is less than the first preset threshold, for example, the maximum service capability of a single storage node, the continuous lowering amplitude may be slightly greater at this point; for example, the concurrency may be lowered at a halved speed.

S216: based on the adjusted concurrency, performing a query processing operation on the query request corresponding to the feedback message of a busy service, returning to step S208, and continuing the detection.

In the query processing method according to the present embodiment, by adopting the above-mentioned implementation, flow control may be performed on the query request on the computing node side, such that the retrieval request of the simple query is satisfied as much as possible, and the retrieval request of the complex query is satisfied by lowering the concurrency to strive for most resources; if the retrieval request is not satisfied after the concurrency is lowered, part of the retrieval requests may be determined to fail with the preset probability, so as to save the resources to serve the rest of the retrieval requests. If the feedback message of a busy service is still received when the concurrency is adjusted to the quite-small second preset threshold, the retrieval failure may be directly fed back to the user. With the technical solution of the present embodiment, the query flow of the retrieval request may be effectively controlled on the computing node side, thereby effectively improving the query processing efficiency.

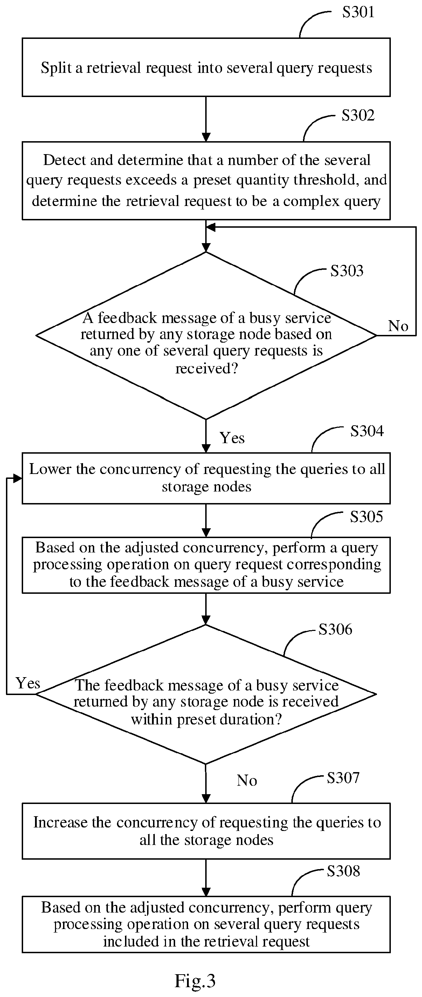

Fig. 3 is a schematic diagram according to a third embodiment of the present disclosure; the technical solution of a query processing method according to the present embodiment of the present disclosure is further described in more detail based on the technical solution of the above-mentioned embodiments shown in Figs. 1 and 2. As shown in Fig. 3, the query processing method according to the present embodiment may include the following steps of:
S301: splitting a retrieval request into several query requests.
S302: detecting and determining that a number of the several query requests exceeds a preset quantity threshold, and determining the retrieval request to be a complex query.
S303: based on current concurrency, detecting whether a feedback message of a busy service returned by any storage node based on any one of the several query requests is received; if yes, executing step S304; if no, continuing the detection.
S304: lowering the concurrency of requesting the queries to all storage nodes; executing step S305.
S305: based on the adjusted concurrency, performing a query processing operation on the query request corresponding to the feedback message of a busy service; executing step S306.
S306: based on the current concurrency, detecting whether the feedback message of a busy service returned by any storage node is received within preset duration; if no, executing step S307; if yes, returning to step S304, and performing processing according to a receiving condition in step S303.

The preset duration in the present embodiment may be selected according to practical experience, for example, 30 minutes, one hour or other duration.

S307: increasing the concurrency of requesting the queries to all the storage nodes; executing step S308.

S308: based on the adjusted concurrency, performing the query processing operation on the several query requests included in the retrieval request.

**In** the present embodiment, the adjusted concurrency becomes larger, and a computing node may detect whether the current concurrency reaches the adjusted concurrency in real time, and if no, a next query request is supplemented in time for querying. Whether the concurrency reaches the adjusted concurrency is further detected, and if no, a next query request is continuously supplemented for querying until the concurrency reaches the adjusted concurrency, thus fully utilizing all query resources of a system to perform a query service.

In the solution of the present embodiment, after the storage node service is filled up and the concurrency of the computing node is lowered, whether the condition that storage of a service node is filled up does not occur within a period of time may be continuously detected, and if yes, the concurrency may be increased, so as to fully utilize all the query resources. In addition, optionally, if the service is filled up again after the concurrency is increased, the concurrency of the computing node may be continuously lowered according to step S304 or the description of the embodiment shown in Fig. 2.

The technical solution of the present embodiment may also be used in combination with the technical solution of the embodiment shown in Fig. 2, and after the concurrency is lowered each time, the solution of the embodiment shown in Fig. 3 may be adopted to attempt to increase the concurrency again.

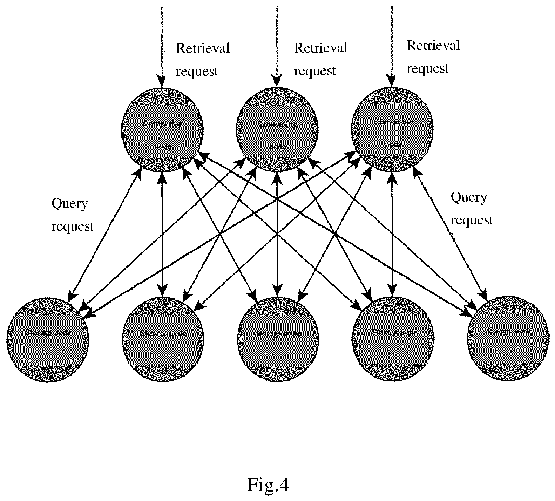

Fig. 4 is a working principle diagram of a distributed graph database system according to the present embodiment, and as shown in Fig. 4, the distributed graph database system may include a plurality of computing nodes and a plurality of storage nodes. Each computing node is configured to receive an external retrieval request. The computing node is also configured to split each retrieval request into several query requests. Then, the storage node of each query request is positioned, as shown in Fig. 4, and the query request is sent to the corresponding storage node. To improve the querying efficiency, each computing node may send the query requests to the plural storage nodes with high concurrency. The technical solution of the present embodiment and the technical solution of the embodiment shown in Fig. 2 may be applied to any computing node shown in Fig. 4 to realize the query processing operation described in the above-mentioned embodiments.

In the query processing method according to the present embodiment, when the computing node does not receive the feedback message of a busy service within certain preset duration after the concurrency of the computing node is lowered, the concurrency may be increased, so as to more effectively utilize the query resources of the system, and further effectively improve the query processing efficiency.

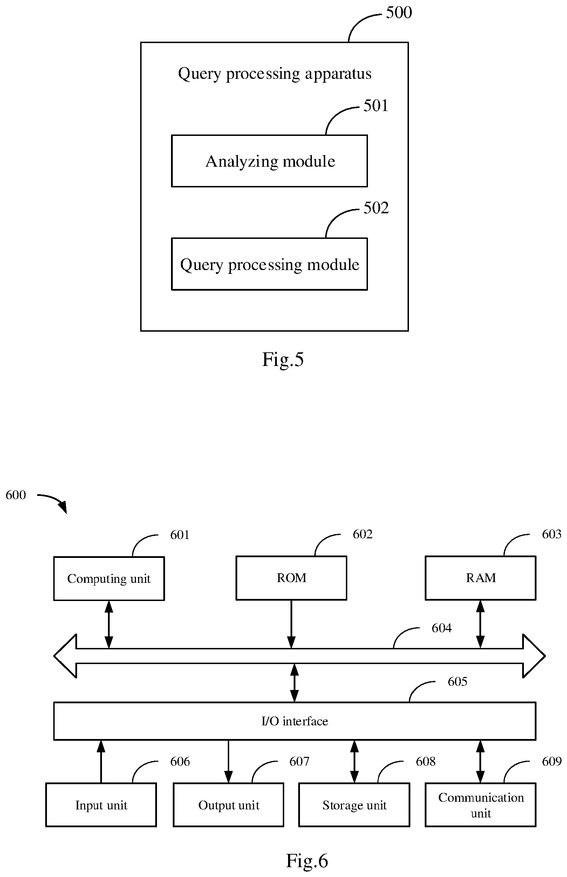

Fig. 5 is a schematic diagram according to a fourth embodiment of the present disclosure; as shown in Fig. 5, the present embodiment provides a query processing apparatus 500, including:
an analyzing module 501 configured to analyze a type of a received retrieval request; and
a query processing module 502 configured to perform a query processing operation on the retrieval request based on the type of the retrieval request.

The query processing apparatus 500 according to the present embodiment has the same implementation as the above-mentioned relevant method embodiment by adopting the above-mentioned modules to implement the implementation principle and the technical effects of the query processing operation, and for details, reference may be made to the description of the above-mentioned relevant method embodiment, and details are not repeated herein.

Further, in one embodiment of the present disclosure, the analyzing module 501 is configured to:
split a retrieval request into several query requests;
detect whether a number of the several query requests exceeds a preset quantity threshold;
if no, determine the retrieval request to be a simple query.

Further optionally, in one embodiment of the present disclosure, the query processing module 502 is configured to:
if the retrieval request is a simple query, after receiving a feedback message of a busy service returned by a first storage node based on a first query request in the several query requests, continuously send the first query request to the first storage node.

Further, in one embodiment of the present disclosure, the analyzing module 501 is further configured to:
if the number of the several query requests exceeds the preset quantity threshold, determine the retrieval request to be a complex query.

Further, in one embodiment of the present disclosure, the query processing module 502 is configured to:
if the retrieval request is a complex query, after receiving a feedback message of a busy service returned by a second storage node based on a second query request in the several query requests, lower concurrency of requesting queries to all storage nodes;
based on the adjusted concurrency, perform a query processing operation on the second query request.

Further, in one embodiment of the present disclosure, the query processing module 502 is further configured to:
detect whether the current concurrency is less than the adjusted concurrency; and
if yes, send the second query request to the second storage node.

Further, in one embodiment of the present disclosure, the query processing module 502 is further configured to:
detect and determine that the current concurrency is not less than a first preset threshold.

Further, in one embodiment of the present disclosure, the query processing module 502 is further configured to:
if detecting that the current concurrency is less than the first preset threshold, determine failure of the retrieval request according to a preset probability.

Further optionally, in one embodiment of the present disclosure, the query processing module 502 is further configured to:
if detecting that the current concurrency is less than the first preset threshold, and determining that the retrieval request does not fail, continuously lower the concurrency of requesting the queries to all the storage nodes.

Further optionally, in one embodiment of the present disclosure, the query processing module 502 is further configured to:
before continuously lowering the concurrency of requesting the queries to all the storage nodes, detect and determine that the current concurrency is not less than a second preset threshold;
further, the query processing module is further configured to:
   if the current concurrency is less than the second preset threshold, after receiving the feedback message of a busy service corresponding to any query request, return query failure of the retrieval request.

Further optionally, in one embodiment of the present disclosure, the query processing module 502 is further configured to:
based on the current concurrency, detect whether the feedback message of a busy service returned by any storage node is received within preset duration;
if no, increase the concurrency of requesting the queries to all the storage nodes; and
based on the adjusted concurrency, perform the query processing operation on the several query requests included in the retrieval request.

The query processing apparatus has the same implementation as the above-mentioned relevant method embodiment by adopting the above-mentioned modules to implement the implementation principle and the technical effects of the query processing operation, and for details, reference may be made to the description of the above-mentioned relevant method embodiment, and details are not repeated herein.

In the technical solution of the present disclosure, the acquisition, storage and application of involved user personal information are in compliance with relevant laws and regulations, and do not violate public order and good customs.

According to the embodiment of the present disclosure, there are also provided an electronic device, a readable storage medium and a computer program product.

Fig. 6 shows a schematic block diagram of an exemplary electronic device 600 which may be configured to implement the embodiment of the present disclosure. The electronic device is intended to represent various forms of digital computers, such as laptop computers, desktop computers, workstations, personal digital assistants, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 6, the device 600 includes a computing unit 601 which may perform various appropriate actions and processing operations according to a computer program stored in a read only memory (ROM) 602 or a computer program loaded from a storage unit 608 into a random access memory (RAM) 603. Various programs and data necessary for the operation of the device 600 may be also stored in the RAM 603. The computing unit 601, the ROM 602, and the RAM 603 are connected with one other through a bus 604. An input/output (I/O) interface 605 is also connected to the bus 604.

The plural components in the device 600 are connected to the I/O interface 605, and include: an input unit 606, such as a keyboard, a mouse, or the like; an output unit 607, such as various types of displays, speakers, or the like; the storage unit 608, such as a magnetic disk, an optical disk, or the like; and a communication unit 609, such as a network card, a modem, a wireless communication transceiver, or the like. The communication unit 609 allows the device 600 to exchange information/data with other devices through a computer network, such as the Internet, and/or various telecommunication networks.

The computing unit 601 may be a variety of general and/or special purpose processing components with processing and computing capabilities. Some examples of the computing unit 601 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 601 performs the methods and processing operations described above, such as the method according to the present disclosure. For example, in some embodiments, the method according to the present disclosure may be implemented as a computer software program tangibly contained in a machine readable medium, such as the storage unit 608. In some embodiments, part or all of the computer program may be loaded and/or installed into the device 600 via the ROM 602 and/or the communication unit 609. When the computer program is loaded into the RAM 603 and executed by the computing unit 601, one or more steps of the method according to the present disclosure may be performed. Alternatively, in other embodiments, the computing unit 601 may be configured to perform the method according to the present disclosure by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server or a server of a distributed system, or a server incorporating a blockchain.

## Claims

1. A query processing method for a distributed graph database system, comprising:
analyzing (S101) a type of a received retrieval request;
further comprising:
splitting a retrieval request into several query requests, detecting whether a number of the several query requests exceeds a preset quantity threshold which is an integer greater than 3;
determining the retrieval request to be a simple query if the number of the several query requests does not exceed the preset quantity threshold, and continuously sending the first query request to the first storage node after receiving a feedback message of a busy service returned by a first storage node based on a first query request in the several query requests,
determining the retrieval request to be a complex query if the number of the several query requests exceeds the preset quantity threshold; and
performing (S102) a query processing operation on the retrieval request based on the type of the retrieval request;
further comprising:
lowering concurrency of requesting queries to all storage nodes after receiving a feedback message of a busy service returned by a second storage node based on a second query request in the several query requests, and performing a query processing operation on the second query request based on the adjusted concurrency;
detecting a feedback message of a busy service returned by any storage node based on any one of the several query requests is received based on the lowered concurrency;
detecting whether a current concurrency is less than a first preset threshold which is the maximum service capability of one storage node, and continuously lowering the concurrency of requesting the queries to all storage nodes if the current concurrency is not less than the first preset threshold, and determining failure of the retrieval request according to a preset probability if the current concurrency is less than the first preset threshold, wherein the preset probability being set as a function of an expected query efficiency or a load of the storage node.

2. The method according to claim 1,
wherein before the continuously lowering the concurrency of requesting the queries to all the storage nodes, further comprising:
detecting and determining that the current concurrency is not less than a second preset threshold which is less than the first preset threshold and set to be the minimum service capability of the distributed graph database system;
the method further comprising:
if the current concurrency is less than the second preset threshold, after receiving the feedback message of a busy service corresponding to any query request, returning query failure of the retrieval request.

3. The method according to any one of claim 1 or 2, after the lowering concurrency of requesting queries to all storage nodes, further comprising:
based on the current concurrency, detecting whether the feedback message of a busy service returned by any storage node is received within a preset duration which is more than 30 minutes;
if the feedback message is not received within preset duration, increasing the concurrency of requesting the queries to all the storage nodes; and
based on the adjusted concurrency, performing the query processing operation on the several query requests comprised in the retrieval request.

4. A query processing apparatus (500) for a distributed graph database system, comprising:
an analyzing module (501) configured to analyze a type of a received retrieval request, wherein the analyzing module (501) is configured to split the retrieval request into several query requests; detect whether a number of the several query requests exceeds a preset quantity threshold which is an integer greater than 3; and
if the number of the several query requests does not exceed the preset quantity threshold, determine the retrieval request to be a simple query; and
determine the retrieval request to be a complex query if the number of the several query requests exceeds the preset quantity threshold.
and
a query processing module (502) configured to perform a query processing operation on the retrieval request based on the type of the retrieval request, if determining the retrieval request is the simple query, continuously send the first query request to the first storage node after receiving a feedback message of a busy service returned by a first storage node based on a first query request in the several query requests, and.
if determining the retrieval request is a complex query, lower concurrency of requesting queries to all storage nodes after receiving a feedback message of a busy service returned by a second storage node based on a second query request in the several query requests, and perform a query processing operation on the second query request based on the adjusted concurrency; detect a feedback message of a busy service returned by any storage node based on any one of the several query requests is received based on the lowered concurrency; detect whether a current concurrency is less than a first preset threshold which is the maximum service capability of one storage node, and , and continuously lower the concurrency of requesting the queries to all storage nodes if the current concurrency is not less than the first preset threshold, and determine failure of the retrieval request according to a preset probability if the current concurrency is less than the first preset threshold, wherein the preset probability being set as a function of an expected query efficiency or a load of the storage node.

5. A non-transitory computer readable storage medium storing computer instructions which, when executed by a computer, cause a computer to perform the method according to any one of claims 1 to 3.

6. A computer program product comprising a computer program which, when executed by a processor, implements the method according to any one of claims 1 to 3.

## Patentansprüche

1. Abfrageverarbeitungsverfahren für ein verteiltes Graphdatenbanksystem, das umfasst:
Analysieren (S101) eines Typs einer empfangenen Abrufanforderung;
ferner umfassend:
Teilen einer Abrufanforderung in mehrere Abfrageanforderungen, Detektieren, ob eine Anzahl der mehreren Abfrageanforderungen einen vorbestimmten Mengenschwellenwert überschreitet, der eine ganze Zahl größer als 3 ist;
Bestimmen, dass die Abrufanforderung eine einfache Abfrage ist, wenn die Anzahl der mehreren Abfrageanforderungen den vorbestimmten Mengenschwellenwert nicht überschreitet, und kontinuierliches Senden der ersten Abfrageanforderung an den ersten Speicherknoten nach dem Empfangen einer Feedback-Nachricht eines belegten Dienstes, die von einem ersten Speicherknoten basierend auf einer ersten Abfrageanforderung in den mehreren Abfrageanforderungen zurückgegeben wird,
Bestimmen, dass die Abrufanforderung eine komplexe Abfrage ist, wenn die Anzahl der mehreren Abfrageanforderungen den vorbestimmten Mengenschwellenwert überschreitet; und
Durchführen (S102) eines Abfrageverarbeitungsvorgangs an der Abrufanforderung basierend auf dem Typ der Abrufanforderung;
ferner umfassend:
Verringern der Nebenläufigkeit von Abrufanforderungen an alle Speicherknoten nach dem Empfangen einer Feedback-Nachricht eines belegten Dienstes, die von einem zweiten Speicherknoten basierend auf einer zweiten Abfrageanforderung an den mehreren Abfrageanforderungen zurückgegeben wird, und Durchführen eines Abfrageverarbeitungsvorgangs an der zweiten Abfrageanforderung basierend auf der angepassten Nebenläufigkeit;
Detektieren, dass eine Feedback-Nachricht eines belegten Dienstes, die von einem beliebigen Speicherknoten basierend auf einer der mehreren Abfrageanforderungen zurückgegeben wird, basierend auf der verringerten Nebenläufigkeit empfangen wird;
Detektieren, ob eine aktuelle Nebenläufigkeit kleiner als ein erster vorbestimmter Schwellenwert ist, der die maximale Dienstkapazität eines Speicherknotens ist, und kontinuierliches Verringern der Nebenläufigkeit der Anforderung der Abfragen an alle Speicherknoten, wenn die aktuelle Nebenläufigkeit nicht kleiner als der erste vorbestimmte Schwellenwert ist, und Bestimmen eines Fehlschlags der Abrufanforderung entsprechend einer vorbestimmten Wahrscheinlichkeit, wenn die aktuelle Nebenläufigkeit kleiner als der erste vorbestimmte Schwellenwert ist, wobei die vorbestimmte Wahrscheinlichkeit in Abhängigkeit von einer erwarteten Abfrageeffizienz oder einer Last des Speicherknotens festgelegt wird.

2. Verfahren nach Anspruch 1, wobei das Verfahren vor dem kontinuierlichen Verringern der Nebenläufigkeit der Anforderung der Abfragen an alle Speicherknoten ferner umfasst:
Detektieren und Bestimmen, dass die aktuelle Nebenläufigkeit nicht kleiner als ein zweiter vorbestimmter Schwellenwert ist, der kleiner als der erste vorbestimmte Schwellenwert ist und als minimale Dienstkapazität des verteilten Graphdatenbanksystems festgelegt ist;
wobei das Verfahren ferner umfasst:
wenn die aktuelle Nebenläufigkeit kleiner als der zweite vorbestimmte Schwellenwert ist, nach dem Empfangen der Feedback-Nachricht eines belegten Diensts, der einer beliebigen Abfrageanforderung entspricht, Zurückgeben eines Abfragefehlschlags der Abrufanforderung.

3. Verfahren nach einem der Ansprüche 1 oder 2, das nach dem Verringern der Nebenläufigkeit von Anforderungsabfragen an alle Speicherknoten ferner umfasst:
basierend auf der aktuellen Nebenläufigkeit, Detektieren, ob die Feedback-Nachricht eines belegten Dienstes, die von einem beliebigen Speicherknoten zurückgegeben wird, innerhalb eines vorbestimmten Zeitraums empfangen wird, der mehr als 30 Minuten beträgt;
wenn die Feedback-Nachricht nicht innerhalb des vorbestimmten Zeitraums empfangen wird, Erhöhen der Nebenläufigkeit der Anforderungen der Abfragen an alle Speicherknoten; und
basierend auf der angepassten Nebenläufigkeit, Durchführen des Abfrageverarbeitungsvorgangs an den mehreren Abfrageanforderungen, die in der Abrufanforderung enthalten sind.

4. Abfrageverarbeitungsvorrichtung (500) für ein verteiltes Graphdatenbanksystem, die aufweist:
ein Analysemodul (501), das dazu ausgebildet ist, einen Typ einer empfangenen Abrufanforderung zu analysieren, wobei das Analysemodul (501) dazu ausgebildet ist, die Abrufanforderung in mehrere Abfrageanforderungen zu teilen; Detektieren, ob eine Anzahl der mehreren Abfrageanforderungen einen vorbestimmten Mengenschwellenwert überschreitet, der eine ganze Zahl größer als 3 ist; und
wenn die Anzahl der mehreren Abfrageanforderungen den vorbestimmten Mengenschwellenwert nicht überschreitet, Bestimmen, dass die Abrufanforderung eine einfache Abfrage ist; und
Bestimmen, dass die Abrufanforderung eine komplexe Abfrage ist, wenn die Anzahl der mehreren Abfrageanforderungen den vorbestimmten Schwellenwert überschreitet, und
ein Abfrageverarbeitungsmodul (502), das dazu ausgebildet ist, einen Abfrageverarbeitungsvorgang an der Abrufanforderung basierend auf dem Typ der Abrufanforderung durchzuführen, wenn bestimmt wird, dass die Abrufanforderung die einfache Abfrage ist, kontinuierliches Senden der ersten Abfrageanforderung an den ersten Speicherknoten nach dem Empfangen einer Feedback-Nachricht eines belegten Dienstes, die von einem ersten Speicherknoten basierend auf einer ersten Abfrageanforderung in den mehreren Abfrageanforderungen zurückgegeben wird, und
wenn bestimmt wird, dass die Abrufanforderung eine komplexe Abfrage ist, Verringern der Nebenläufigkeit von Anforderungsabfragen an alle Speicherknoten nach dem Empfangen einer Feedback-Nachricht eines belegten Dienstes, die von einem zweiten Speicherknoten basierend auf einer zweiten Abfrageanforderung in den mehreren Abfrageanforderungen zurückgegeben wird, und Durchführen eines Abfrageverarbeitungsvorgangs an der zweiten Abfrageanforderung basierend auf der angepassten Nebenläufigkeit; Detektieren, dass eine Feedback-Nachricht eines belegten Dienstes, die von einem beliebigen Speicherknoten basierend auf einer der mehreren Abfrageanforderungen zurückgegeben wird, basierend auf der verringerten Nebenläufigkeit empfangen wird; Detektieren, ob eine aktuelle Nebenläufigkeit kleiner als ein erster vorbestimmter Schwellenwert ist, der die maximale Dienstkapazität eines Speicherknotens ist, und kontinuierliches Verringern der Nebenläufigkeit der Anforderung der Abfragen an alle Speicherknoten, wenn die aktuelle Nebenläufigkeit nicht kleiner als der erste vorbestimmte Schwellenwert ist, und Bestimmen eines Fehlschlags der Abrufanforderung entsprechend einer vorbestimmten Wahrscheinlichkeit, wenn die aktuelle Nebenläufigkeit kleiner als der erste vorbestimmte Schwellenwert ist, wobei die vorbestimmte Wahrscheinlichkeit in Abhängigkeit von einer erwarteten Abfrageeffizienz oder einer Last des Speicherknotens festgelegt wird.

5. Nicht-transitorisches computerlesbares Speichermedium, auf dem Computeranweisungen gespeichert sind, die bei Ausführung durch einen Computer bewirken, dass ein Computer das Verfahren nach einem der Ansprüche 1 bis 3 durchführt.

6. Computerprogrammprodukt, das ein Computerprogramm aufweist, das bei Ausführung durch einen Prozessor das Verfahren nach einem der Ansprüche 1 bis 3 implementiert.

## Revendications

1. Procédé de traitement d'interrogation d'un système de base de données orientée graphe distribuée, comprenant l'étape consistant à :
analyser (S101) un type d'une demande d'extraction reçue ;
comprenant en outre les étapes consistant à :
diviser une demande d'extraction en plusieurs demandes d'interrogation, détecter si un nombre des plusieurs demandes d'interrogation dépasse un seuil de quantité prédéfini qui correspond à un nombre entier supérieur à 3 ;
déterminer la demande d'extraction comme étant une simple interrogation si le nombre des plusieurs demandes d'interrogation ne dépasse pas le seuil de quantité prédéfini, et envoyer de façon continue la première demande d'interrogation au premier nœud de stockage après la réception d'un message de rétroaction d'un service occupé renvoyé par un premier nœud de stockage sur la base d'une première demande d'interrogation des plusieurs demandes d'interrogation,
déterminer la demande d'extraction comme étant une interrogation complexe si le nombre des plusieurs demandes d'interrogation dépasse le seuil de quantité prédéfini ; et
exécuter (S102) une opération de traitement d'interrogation sur la demande d'extraction sur la base du type de la demande d'extraction ;
comprenant en outre les étapes consistant à :
réduire la simultanéité de demande d'interrogations vers tous les nœuds de stockage après la réception d'un message de rétroaction d'un service occupé renvoyé par un second nœud de stockage sur la base d'une seconde demande d'interrogation des plusieurs demandes d'interrogation, et exécuter une opération de traitement d'interrogation sur la seconde demande d'interrogation sur la base de la simultanéité réglée ;
détecter qu'un message de rétroaction d'un service occupé renvoyé par un nœud de stockage quelconque sur la base de l'une quelconque des plusieurs demandes d'interrogation est reçu sur la base de la simultanéité réduite ;
détecter si une simultanéité courante est inférieure à un premier seuil prédéfini qui correspond à la capacité de service maximale d'un nœud de stockage, et réduire de façon continue la simultanéité de demande des interrogations vers tous les nœuds de stockage si la simultanéité courante n'est pas inférieure au premier seuil prédéfini, et déterminer un échec de la demande d'extraction conformément à une probabilité prédéfinie si la simultanéité courante est inférieure au premier seuil prédéfini, dans lequel la probabilité prédéfinie est définie comme une fonction d'une efficacité d'interrogation souhaitée ou d'une charge du nœud de stockage.

2. Procédé selon la revendication 1,
dans lequel avant la réduction continue de la simultanéité de demande des interrogations vers tous les nœuds de stockage, le procédé comprend en outre l'étape consistant à :
détecter et déterminer que la simultanéité courante n'est pas inférieure à un second seuil prédéfini qui est inférieur au premier seuil prédéfini et défini comme étant la capacité de service minimale du système de base de données orientée graphe distribuée ;
le procédé comprenant en outre l'étape consistant à :
si la simultanéité courante est inférieure au second seuil prédéfini, après la réception du message de rétroaction d'un service occupé correspondant à une quelconque demande d'interrogation, renvoyer un échec d'interrogation de la demande d'extraction.

3. Procédé selon l'une ou l'autre des revendications 1 et 2, dans lequel, après la réduction de la simultanéité de demande d'interrogations vers tous les nœuds de stockage, le procédé comprend en outre les étapes consistant à :
sur la base de la simultanéité courante, détecter si le message de rétroaction d'un service occupé renvoyé par un quelconque nœud de stockage est reçu sur une durée prédéfinie qui est supérieure à 30 minutes ;
si le message de rétroaction n'est pas reçu sur la durée prédéfinie, augmenter la simultanéité de demande des interrogations vers tous les nœuds de stockage ; et
sur la base de la simultanéité réglée, exécuter l'opération de traitement d'interrogation sur les plusieurs demandes d'interrogation comprises dans la demande d'extraction.

4. Appareil de traitement d'interrogation (500) d'un système de base de données orientée graphe distribuée, comprenant :
un module d'analyse (501) configuré pour analyser un type d'une demande d'extraction reçue, dans lequel le module d'analyse (501) est configuré pour diviser la demande d'extraction en plusieurs demandes d'interrogation ; pour détecter si un nombre des plusieurs demandes d'interrogation dépasse un seuil de quantité prédéfini qui correspond à un nombre entier supérieur à 3 ; et
si le nombre des plusieurs demandes d'interrogation ne dépasse pas le seuil de quantité prédéfini, pour déterminer la demande d'extraction comme étant une interrogation simple ; et
pour déterminer la demande d'extraction comme étant une interrogation complexe si le nombre des plusieurs demandes d'interrogation dépasse le seuil de quantité prédéfini ;
et
un module de traitement d'interrogation (502) configuré pour exécuter une opération de traitement d'interrogation sur la demande d'extraction sur la base du type de la demande d'extraction, s'il est déterminé que la demande d'extraction est l'interrogation simple, pour envoyer de façon continue la première demande d'interrogation au premier nœud de stockage après la réception d'un message de rétroaction d'un service occupé renvoyé par un premier nœud de stockage sur la base d'une première demande d'interrogation des plusieurs demandes d'interrogation, et
s'il est déterminé que la demande d'extraction est une interrogation complexe, pour réduire une simultanéité de demande d'interrogations vers tous les nœuds de stockage après la réception d'un message de rétroaction d'un service occupé renvoyé par un second nœud de stockage sur la base d'une seconde demande d'interrogation des plusieurs demandes d'interrogation, et pour exécuter une opération de traitement d'interrogation sur la seconde demande d'interrogation sur la base de la simultanéité réglée ; pour détecter si un message de rétroaction d'un service occupé renvoyé par un quelconque nœud de stockage sur la base de l'une quelconque des plusieurs demandes d'interrogation est reçu sur la base de la simultanéité réduite ; pour détecter si une simultanéité courante est inférieure à un premier seuil prédéfini qui correspond à la capacité de service maximale d'un nœud de stockage, et pour réduire de façon continue la simultanéité de demande des interrogations vers tous les nœuds de stockage si la simultanéité courante n'est pas inférieure au premier seuil prédéfini, et pour déterminer un échec de la demande d'extraction conformément à une probabilité prédéfinie si la simultanéité courante est inférieure au premier seuil prédéfini, dans lequel la probabilité prédéfinie est définie comme une fonction d'une efficacité d'interrogation souhaitée ou d'une charge du nœud de stockage.

5. Support d'informations non transitoire lisible par ordinateur maintenant des instructions d'ordinateur qui, lorsqu'elles sont exécutées par un ordinateur, amènent un ordinateur à mettre en œuvre le procédé selon l'une quelconque des revendications 1 à 3.

6. Produit-programme d'ordinateur comprenant un programme d'ordinateur qui, lorsqu'il est exécuté par un processeur, met en œuvre le procédé selon l'une quelconque des revendications 1 à 3.
